# EUROPEAN PATENT SPECIFICATION

(11) **EP 2 832 199 B1**
(45) Date of publication and mention of the grant of the patent: **20.04.2016**
(21) Application number: 14177060.2
(22) Date of filing: 15.07.2014
(51) Int. Cl.: A01B 59/041, A01B 59/06

(54) **Drawbar support assembly**
Deichselstützanordnung
Ensemble support de barre de traction

(30) Priority: 29.07.2013 US 201313952744
(43) Date of publication of application: 04.02.2015
(73) Proprietor: Deere & Company, Moline, IL 61265 (US)
(72) Inventor: Bhosale, Digvijay, 411037 Pune (IN); Heimbuch, Benjamin J, Wickenburg, AZ Arizona 85390 (US); Kreis, Edwin R, Waterloo, IA Iowa 50703 (US)
(74) Representative: Dehnhardt, Florian Christopher

(56) References cited:
- EP-A1- 1 116 431
- WO-A2-2013/085545
- US-A- 4 116 458

## Description

The present invention relates to a drawbar support assembly.

Various drawbar support assemblies are available to mount at the rear of an agricultural tractor. However, such drawbar support assemblies interfere with the use of a conventional three-point hitch, because the components of the drawbar support assembly and those of the three-point hitch may collide with each other when using a wide swing drawbar. It is desired to provide a drawbar support assembly which does not interfere with the use of a conventional three-point hitch.

WO2013085545 discloses a drawbar according to the preamble of claim 1.

This and other objects are achieved by the present invention, wherein a drawbar support assembly is provided. The drawbar support assembly comprises a rail member adapted to be mounted to a vehicle, in particular at the rear of an agricultural tractor. A slider member is slidably received by the rail member. A drawbar support member is movably coupled to the slider member such that the drawbar is swingable laterally, wherein the drawbar support member has a drawbar receiving part adapted to receive and support a drawbar.

For a complete understanding of the objects, techniques, and structure of the invention reference should be made to the following detailed description and accompanying drawings, wherein similar components are designated by identical reference numerals:
- Fig. 1: is a rear side perspective view of a drawbar support assembly embodying the invention,
- Fig. 2: is a top perspective view of a rail member and a slider member shown in Fig. 1 with the slider member being slidably received by the rail member,
- Fig. 3: is a bottom perspective view of the rail member and the slider member shown in Fig. 2,
- Fig. 4: is a top rear perspective view of the slider member shown in Figs. 2 and 3,
- Fig. 5: is a top front perspective view of the slider member shown in Fig. 4 with a drawbar support,
- Fig. 6: is a top front perspective view of a rail member shown in Figs. 2 and 3,
- Fig. 7: is a top rear perspective view of the rail member shown in Fig. 6,
- Fig. 8: is a partially sectioned top rear perspective view of the rail member shown in Figs. 6 and 7,
- Fig. 9: is another top rear perspective view of the rail member shown in Fig. 8,
- Fig. 10: is a bottom view of the rail member shown in Fig. 9,
- Fig. 11: is a bottom rear perspective view of the rail member shown in Fig. 1 including a pair of stoppers,
- Fig. 12: is a partially sectioned rear perspective view of the rail member shown in Fig. 11, and
- Fig. 13: is a perspective view of a stopper shown in Fig. 12.

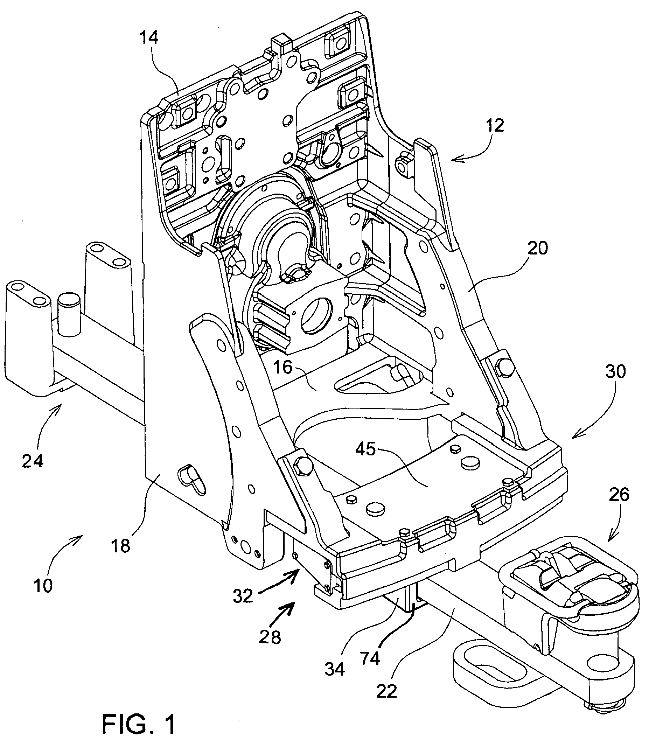

Referring to Figs. 1, 2 and 3, a hitch assembly 10 includes a hitch frame 12 adapted to be mounted to a vehicle, in particular at the rear of an agricultural tractor. The hitch frame 12 includes a front plate 14, a bottom plate 16, a left side plate 18, and a right side plate 20. A drawbar 22 has a first end 24 adapted to be pivotally coupled to the vehicle and a second end 26 adapted to be coupled to an implement. A drawbar support assembly 28 is mounted to the hitch frame 12.

The drawbar support assembly 28 includes a rail member 30, a slider member 32 and a drawbar support member 34. The rail member 30 is attached to the rear ends of the side plates 18 and 20 of the hitch frame 12. The slider member 32 is slidably coupled to or received by the rail member 30. The drawbar support member 34 engages and supports a part of the drawbar 22. The drawbar support member 34 is movably coupled or supported by the slider member 32. As a result, the drawbar 22 is swingable laterally.

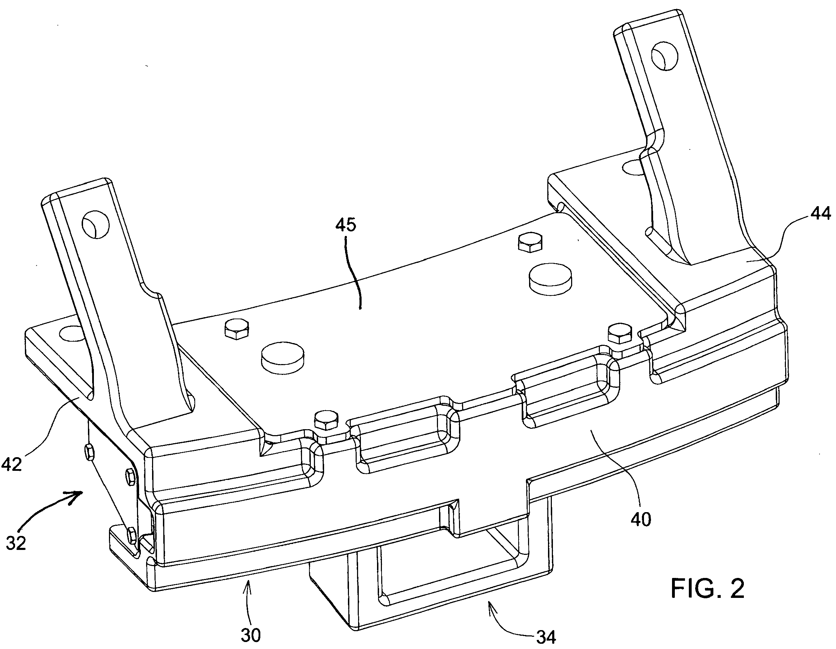

Referring now to Figs. 2, 3 and 7, the rail member 30 has a rear plate 40 and a central top plate 41 which is connected to a pair of top end plates 42 and 44 which extend forwardly from the respective left and right ends of the rear plate 40. An opening 43 is formed in central top plate 41. The opening 43 is covered by a top cover 45. Pin bores 47 and 49 extend through the central top plate 41 and are aligned with similar pin bores in the top cover 45.

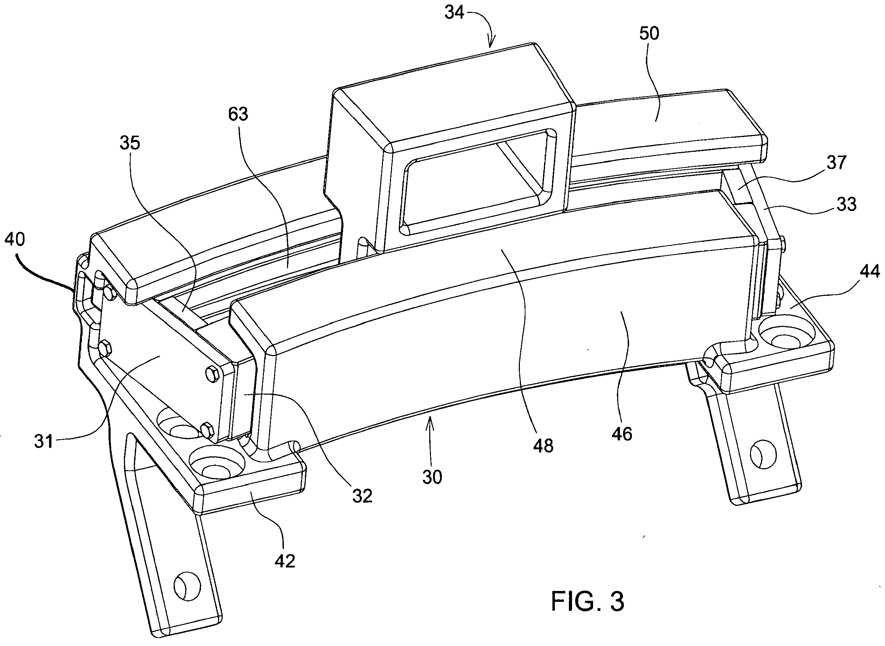

As best seen in Fig. 3, the rail member 30 also includes a front plate 46 and a front bottom plate 48 which projects rearwardly from a bottom edge of the front plate 46. A rear bottom plate 50 projects forwardly from a bottom edge of the rear plate 40. The rear plate 40, front plate 46, front bottom plate 48, and rear bottom plate 50 are curved with a center of curvature centered at a pivot point of the drawbar 22. End plates 31 and 33 are fixed to the ends of slider member 32 to confine the drawbar support member 34 to the interior of the slider member 32. Rubber pads 35 and 37 may be mounted to the inner sides of the end plates 31 and 33, respectively, to absorb impacts from the drawbar support member 34.

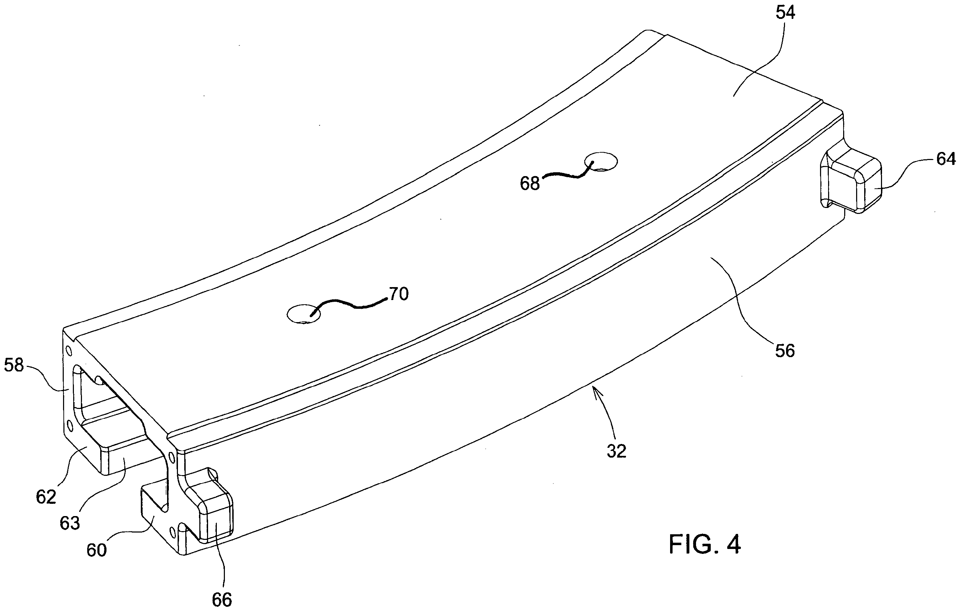

Referring now to Fig. 4, the slider member 32 includes a curved top plate 54 which is joined to a curved rear plate 56 and a curved front plate 58. A curved rear bottom plate 60 projects forwardly from a bottom edge of the curved rear plate 56, and a curved front bottom plate 62 projects rearwardly from a bottom edge of the curved front plate 58. Spaced-apart curved rear bottom plate 60 and curved front bottom plate 62 are separated by a curved gap 63. Stop tabs 64 and 66 project rearwardly from the side ends of the curved rear plate 56. Spaced-apart bores 68 and 70 extend vertically through the curved top plate 54. The slider member 32 is slidably supported by the front and rear bottom plates 48 and 50 of the rail member 30, therefore the slider member 32 is slidable in the rail member 30.

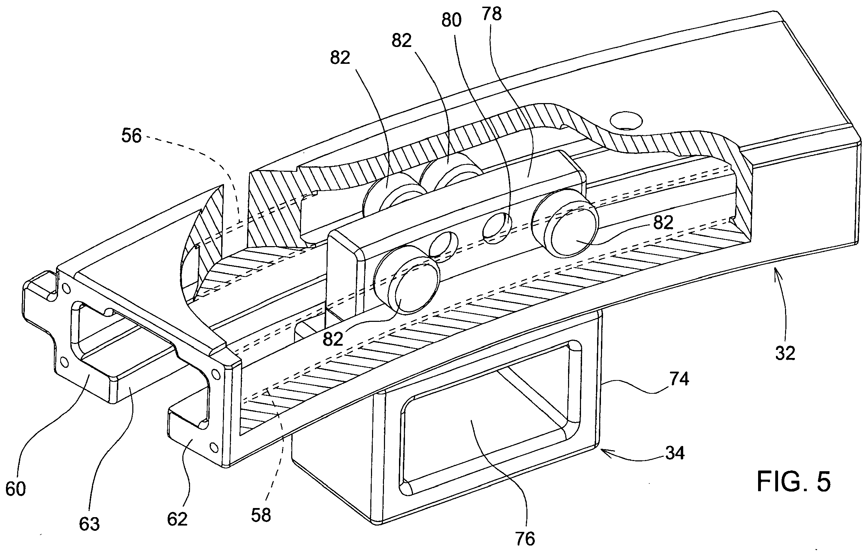

Referring now to Fig. 5, drawbar support member 34 includes a drawbar receiving part 74 which has a rectangular opening 76 for receiving the drawbar 22. Drawbar receiving part 74 depends from plate 78 which has a plurality or bores 80 for receiving cam rollers 82. Cam rollers 82 rollingly engage curved rear bottom plate 60 and curved front bottom plate 62. Plate 78 extends through and is received by the curved gap 63 in the slider member 32.

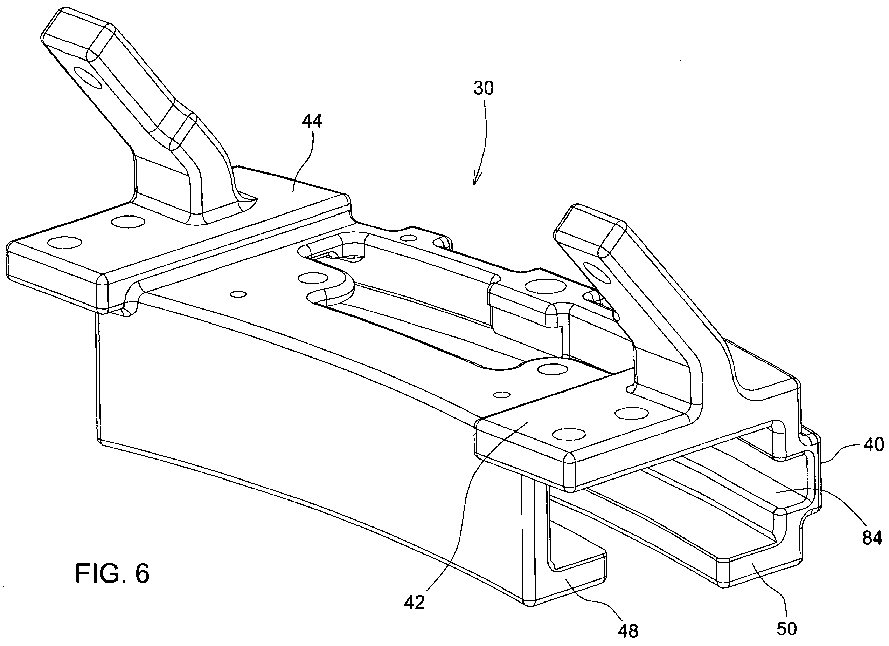

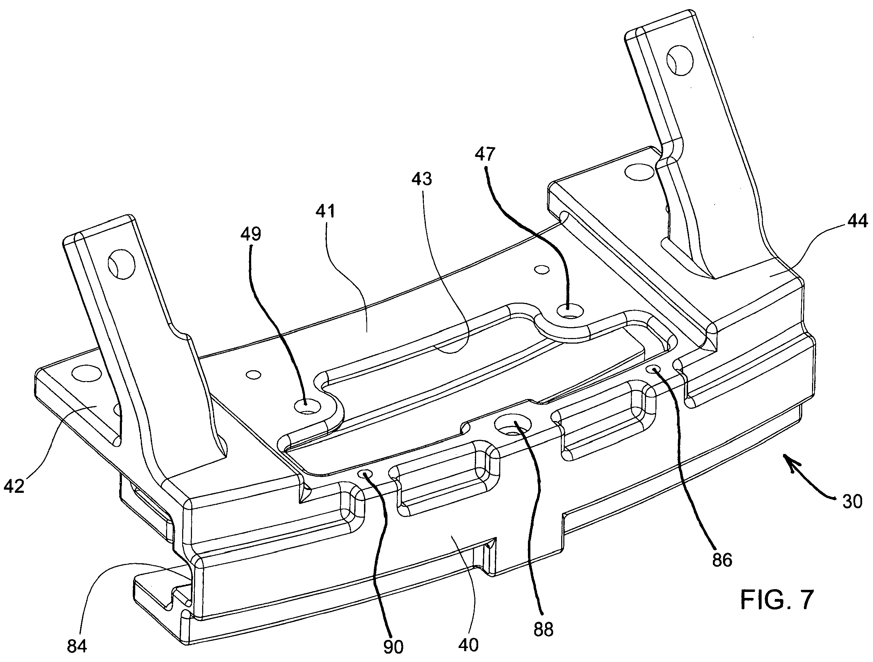

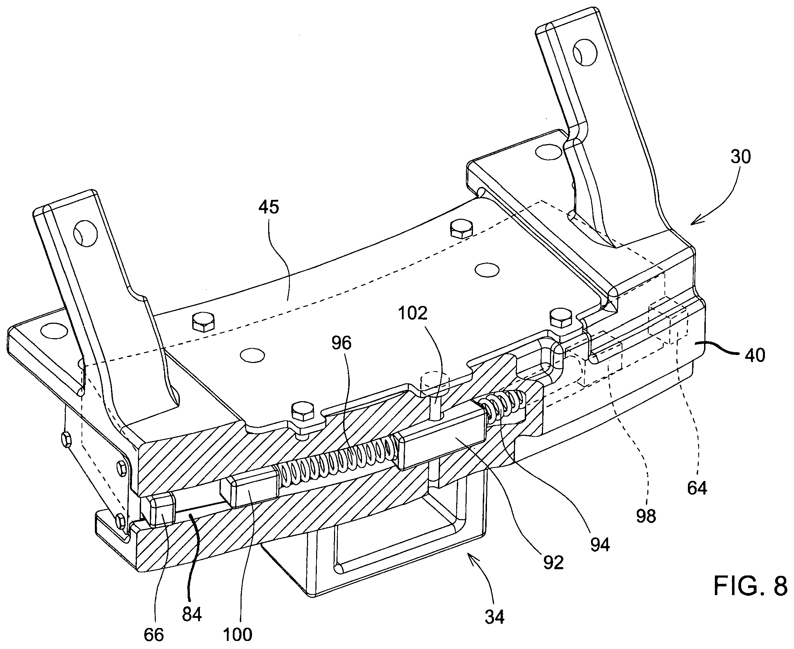

Referring now to Figs. 6 and 7, the rail member 30 includes a forwardly facing curved slot 84 which is formed in the rear plate 40. Forwardly facing curved slot 84 slidably receives the stop tabs 64 and 66 (see Fig. 8). Pin bores 86, 88 and 90 are spaced-apart and extend into the rear plate 40 and intersect with forwardly facing curved slot 84.

As best seen in Fig. 8, forwardly facing curved slot 84 also receives a spring holder 92 which receives and holds the ends of a pair of springs 94 and 96. Spring end blocks 98 and 100 are fixed to the ends of springs 94 and 96, respectively. Spring holder 92 is held in place by pin 102 which can be inserted through pin bore 88 and spring holder 92. Thus, as slider member 32 is slid to the right, stop tab 64 will engage spring end block 98 and compress spring 94. Similarly, as slider member 32 is slid to the left, stop tab 66 will engage end block 100 and compress spring 96. The springs 94 and 96 are part of a spring unit which is biased to urge the slider member 32 to a central position relative to the rail member 30.

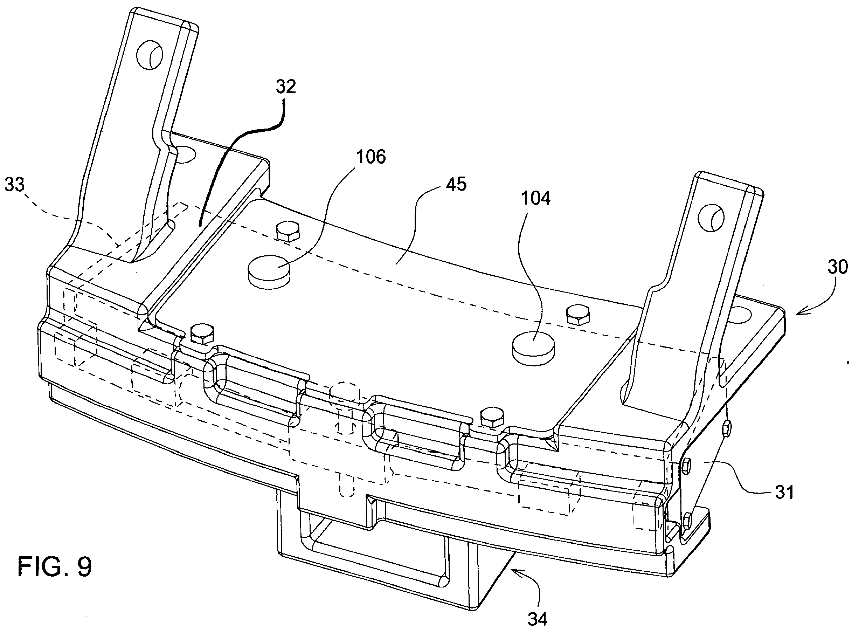

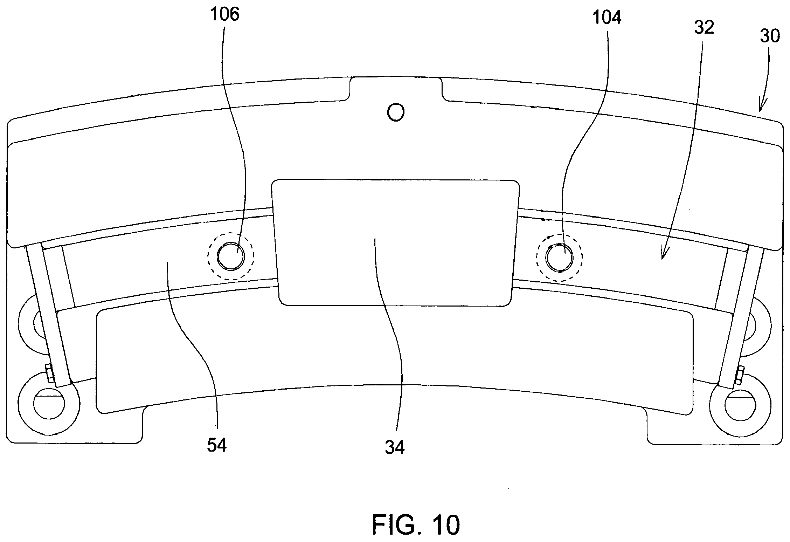

Referring now to Figs. 4, 9 and 10, locking pins 104 and 106 are removably inserted through top cover 45 and pin bores 47 and 49 into pin bores 68 and 70 in the curved top plate 54 of the slider member 32. This prevents slider member 32 from moving laterally with respect to the rail member 30. Furthermore, the locking pins 104 and 106 are engagable with the drawbar support member 34 to limit the swing of the drawbar support member 34 to a certain range, for example, 15 degrees of swing.

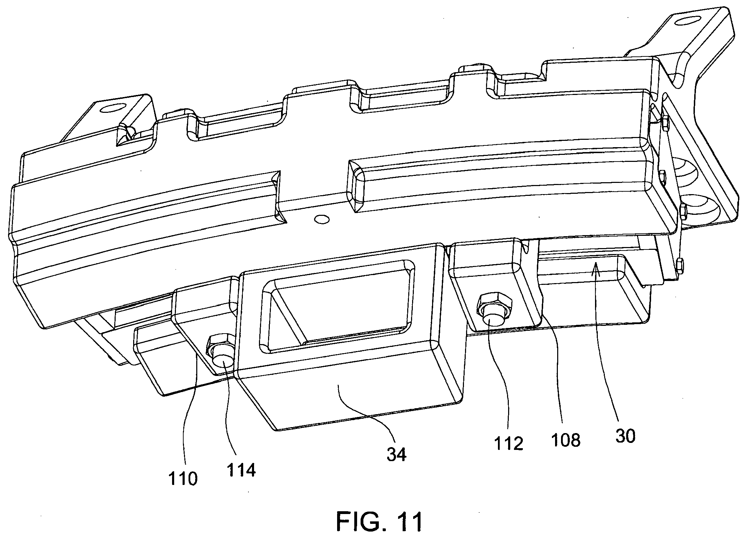

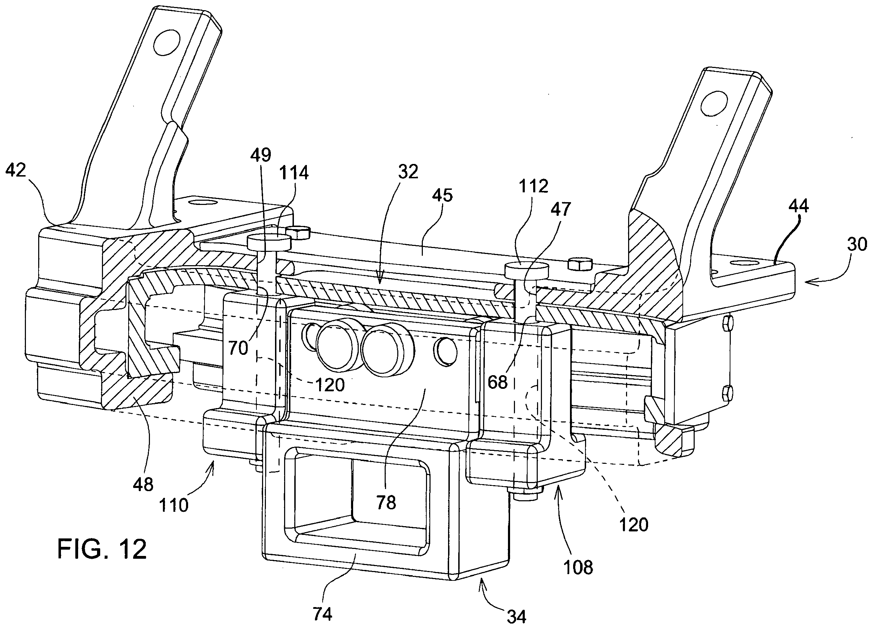

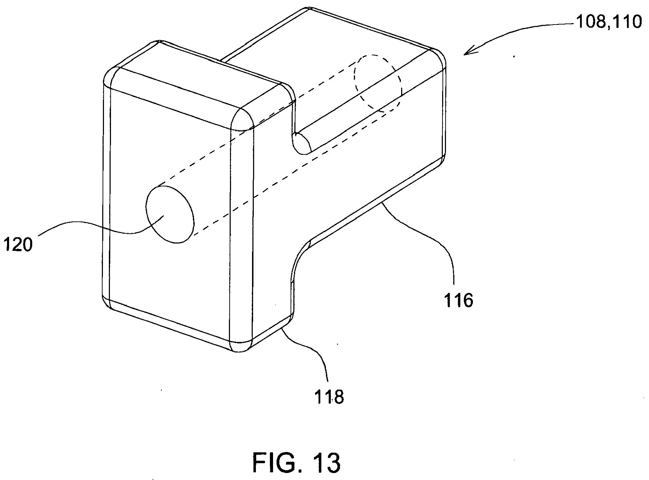

Referring now to Figs. 11, 12 and 13, in an alternative embodiment stoppers 108 and 110 are removably attached by bolts 112 and 114 to lock out and prevent drawbar support member 34 from moving laterally with respect to the rail member 30. As best seen in Fig. 13, each stopper 108 and 110 includes a larger rectangular head portion 118 and a smaller shank portion 116. A bore 120 extends through both the rectangular head portion 118 and shank portion 116 to receive the bolts 112 and 114. Bolts 112 and 114 extend through pin bores 47 and 49 in rail member 30, through bores 68 and 70 in slider member 32 and through bores 120 in stoppers 108 and 110. All lateral swing of the drawbar support member 34 will be prevented when bolts 112 and 114 and stoppers 108 and 110 are installed.

The result is a drawbar support assembly which can be mounted on an agricultural tractor which has a three-point hitch, so that both a wide swing drawbar and the three-point hitch can be used.

## Claims

1. A drawbar support assembly, the drawbar support assembly (28) comprising a rail member (30) adapted to be mounted to a vehicle; a slider member (32) slidably received by the rail member (30); and a drawbar support member (34) having a drawbar receiving part (74) adapted to receive and support a drawbar (22), **characterized in that** the drawbar support member (34) is movably coupled to the slider member (32) such that the drawbar (22) is swingable laterally.

2. The drawbar support assembly according to claim 1, **characterized in that** the slider member (32) forms a pair of spaced-apart curved rear and front bottom plates (60, 62), wherein the drawbar support member (34) includes cam rollers (82) which rollingly engage the curved rear and front bottom plates (60, 62).

3. The drawbar support assembly according to claim 2, **characterized in that** the curved rear and front bottom plates (60, 62) are separated by a curved gap (63), wherein a portion of the drawbar support member (34) is slidably received by said curved gap (63).

4. The drawbar support assembly according to claims 1 to 3, **characterized in that** the rail member (30) forms a forwardly facing curved slot (84), wherein a spring holder (92) is mounted in the forwardly facing curved slot (84) and a pair of springs (94, 96) is attached to opposite sides of the spring holder (92), wherein the slider member (32) includes a pair of stop tabs (64, 66), each stop tab (64, 66) being engagable with a corresponding one of the pair of said springs (94, 96), each one of the pair of said springs (94, 96) being biased to urge the slider member (32) to a central position relative to the rail member (30).

5. The drawbar support assembly according to claims 1 to 4, **characterized by** a pair of pin bores (47, 49) formed in the rail member (30), and a pair of locking pins (104, 106), each locking pin (104, 106) being insertable through one of the pin bores (47, 49) into pin bores (68, 70) in a curved top plate (54) of the slider member (32) to engage the slider member (32) and thereby limit motion of the slider member (32) with respect to the rail member (30).

6. The drawbar support assembly according to claims 1 to 4, **characterized by** a pair of pin bores (47, 49) formed in the rail member (30), a pair of stoppers (108, 110), and a pair of bolts (112, 114), each Bolt (112, 114) being insertable through one of the pin bores (47, 49), through the slider member (32) and through one of the stoppers (108, 110), the stoppers (108, 110) engaging and preventing motion of the drawbar support member (34) relative to the rail member (30).

7. The drawbar support assembly according to claims 1 to 6, **characterized in that** the rail member (30) comprises a front plate (46) and a rear plate (40), wherein a front bottom plate (48) projects rearwardly from a bottom edge of the front plate (46) and a rear bottom plate (50) projects forwardly from a bottom edge of the rear plate (40).

8. The drawbar support assembly according to claim 7, **characterized in that** the rear plate (40), front plate (46), front bottom plate (48), and rear bottom plate (50) are curved with a center of curvature centered at a pivot point of the drawbar (22).

9. The drawbar support assembly according to claims 7 or 8, **characterized in that** a forwardly facing curved slot (84) is formed in the rear plate (40); a spring holder is mounted in the slot; a pairs of springs are attached to opposite sides of the spring holder; and the slider member includes a pair of tabs, each tab being engagable with a corresponding one of the springs, said springs being biased to urge the slider member to a central position relative to the rail member.

10. The drawbar support assembly according to claims 1 to 9, **characterized in that** a pair of end plates (31, 33) are fixed to opposite ends of the slider member (32) to confine the drawbar support member (34) to an interior of the slider member (32).

11. The drawbar support assembly according to claim 10, **characterized by** a pair of rubber pads (35, 37), each rubber pad (35, 37) being mounted to a corresponding one of the end plates (31, 33), the rubber pads (35, 37) absorbing impacts from the drawbar support member (34).

## Patentansprüche

1. Deichselstützanordnung, wobei die Deichselstützanordnung (28) ein Schienenelement (30), das geeignet ist, an einem Fahrzeug montiert zu werden, ein Schieberelement (32), das gleitend vom Schienenelement (30) aufgenommen wird, und ein Deichselstützelement (34) umfasst, das einen Deichselaufnahmeteil (74) hat, der geeignet ist, eine Deichsel (22) aufzunehmen und zu stützen, **dadurch gekennzeichnet, dass** das Deichselstützelement (34) beweglich an das Schieberelement (32) gekoppelt ist, so dass die Deichsel (22) seitlich schwingbar ist.

2. Deichselstützanordnung nach Anspruch 1, **dadurch gekennzeichnet, dass** das Schieberelement (32) ein Paar beabstandete gekrümmte hintere und vordere Bodenplatten (60, 62) bildet, wobei das Deichselstützelement (34) Kurvenrollen (82) aufweist, die die gekrümmten hinteren und vorderen Bodenplatten (60, 62) rollend in Eingriff nehmen.

3. Deichselstützanordnung nach Anspruch 2, **dadurch gekennzeichnet, dass** die gekrümmten hinteren und vorderen Bodenplatten (60, 62) durch einen gekrümmten Spalt (63) getrennt sind, wobei ein Abschnitt des Deichselstützelements (34) gleitend von dem gekrümmten Spalt (63) aufgenommen wird.

4. Deichselstützanordnung nach Ansprüchen 1 bis 3, **dadurch gekennzeichnet, dass** das Schienenelement (30) einen nach vorne weisenden gekrümmten Schlitz (84) bildet, wobei ein Federhalter (92) in dem nach vorne weisenden gekrümmten Schlitz (84) montiert ist und ein Paar Federn (94, 96) an gegenüberliegenden Seiten des Federhalters (92) angebracht ist, wobei das Schieberelement (32) ein Paar Anschlaglaschen (64, 66) aufweist, wobei jede Anschlaglasche (64, 66) mit einer entsprechenden des Paars der Federn (94, 96) in Eingriff bringbar ist, wobei jede des Paars der Federn (94, 96) vorgespannt ist, um das Schieberelement (32) in eine mittlere Position bezüglich des Schienenelements (30) zu drängen.

5. Deichselstützanordnung nach Ansprüchen 1 bis 4, **gekennzeichnet durch** ein Paar Stiftbohrungen (47, 49), die im Schienenelement (30) gebildet sind, und ein Paar Verriegelungsstifte (104, 106), wobei jeder Verriegelungsstift (104, 106) **durch** eine der Stiftbohrungen (47, 49) in Stiftbohrungen (68, 70) in einer gekrümmten oberen Platte (54) des Schieberelements (32) einführbar ist, um das Schieberelement (32) in Eingriff zu nehmen und **dadurch** Bewegung des Schieberelements (32) bezüglich des Schienenelements (30) zu begrenzen.

6. Deichselstützanordnung nach Ansprüchen 1 bis 4, **gekennzeichnet durch** ein Paar Stiftbohrungen (47, 49), die im Schienenelement (30) gebildet sind, ein Paar Anschläge (108, 110) und ein Paar Bolzen (112, 114), wobei jeder Bolzen (112, 114) **durch** eine der Stiftbohrungen (47, 49), **durch** das Schieberelement (32) und **durch** einen der Anschläge (108, 110) einführbar ist, wobei die Anschläge (108, 110) das Deichselstützelement (34) in Eingriff nehmen und dessen Bewegung bezüglich des Schienenelements (30) verhindern.

7. Deichselstützanordnung nach Ansprüchen 1 bis 6, **dadurch gekennzeichnet, dass** das Schienenelement (30) eine vordere Platte (46) und eine hintere Platte (40) umfasst, wobei eine vordere Bodenplatte (48) von einem unteren Rand der vorderen Platte (46) nach hinten vorragt und eine hintere Bodenplatte (50) von einem unteren Rand der hinteren Platte (40) nach vorne vorragt.

8. Deichselstützanordnung nach Anspruch 7, **dadurch gekennzeichnet, dass** die hintere Platte (40), die vordere Platte (46), die vordere Bodenplatte (48) und die hintere Bodenplatte (50) gekrümmt sind, mit einer Krümmungsmitte, die an einem Anlenkpunkt der Deichsel (22) zentriert ist.

9. Deichselstützanordnung nach Ansprüchen 7 oder 8, **dadurch gekennzeichnet, dass** ein nach vorne weisender gekrümmter Schlitz (84) in der hinteren Platte (40) gebildet ist, ein Federhalter in dem Schlitz montiert ist, ein Paar Federn an gegenüberliegenden Seiten des Federhalters angebracht sind und das Schieberelement ein Paar Laschen aufweist, wobei jede Lasche mit einer entsprechenden der Federn in Eingriff bringbar ist, wobei die Federn vorgespannt sind, um das Schieberelement in eine mittlere Position bezüglich des Schienenelements zu drängen.

10. Deichselstützanordnung nach Ansprüchen 1 bis 9, **dadurch gekennzeichnet, dass** ein Paar Endplatten (31, 33) an gegenüberliegenden Enden des Schieberelements (32) befestigt sind, um das Deichselstützelement (34) auf ein Inneres des Schieberelements (32) zu beschränken.

11. Deichselstützanordnung nach Anspruch 10, **gekennzeichnet durch** ein Paar Gummiauflagen (35, 37), wobei jede Gummiauflage (35, 37) an einer entsprechenden der Endplatten (31, 33) montiert ist, wobei die Gummiauflagen (35, 37) Stöße vom Deichselstützelement (34) absorbieren.

## Revendications

1. Ensemble de support de barre de traction, l'ensemble de support de barre de traction (28) comprenant un organe de rail (30) prévu pour être monté sur un véhicule ; un organe de coulisseau (32) reçu de manière coulissante par l'organe de rail (30) ; et un organe de support de barre de traction (34) ayant une partie de réception de barre de traction (74) prévue pour recevoir et supporter une barre de traction (22), **caractérisé en ce que** l'organe de support de barre de traction (34) est accouplé de manière mobile à l'organe de coulisseau (32) de telle sorte que la barre de traction (22) puisse pivoter latéralement.

2. Ensemble de support de barre de traction selon la revendication 1, **caractérisé en ce que** l'organe de coulisseau (32) forme une paire de plaques inférieures arrière et avant courbes (60, 62) espacées l'une de l'autre, l'organe de support de barre de traction (34) comportant des rouleaux de cames (82) qui s'engagent par roulement avec les plaques inférieures arrière et avant courbes (60, 62).

3. Ensemble de support de barre de traction selon la revendication 2, **caractérisé en ce que** les plaques inférieures arrière et avant courbes (62, 62) sont séparées par un espace courbe (63), une portion de l'organe de support de barre de traction (34) étant reçue de manière coulissante par ledit espace courbe (63).

4. Ensemble de support de barre de traction selon les revendications 1 à 3, **caractérisé en ce que** l'organe de rail (30) forme une fente courbe tournée vers l'avant (84), un support de ressort (92) étant monté dans la fente courbe tournée vers l'avant (84) et une paire de ressorts (94, 96) étant attachée à des côtés opposés du support de ressort (92), l'organe de coulisseau (32) comportant une paire de languettes d'arrêt (64 66), chaque languette d'arrêt (64, 66) pouvant s'engager avec l'un correspondant de la paire desdits ressorts (94, 96), chacun de la paire desdits ressorts (94, 96) étant sollicité de manière à pousser l'organe de coulisseau (32) dans une position centrale par rapport à l'organe de rail (30).

5. Ensemble de support de barre de traction selon les revendications 1 à 4, **caractérisé par** une paire de trous de goupille (47, 49) formée dans l'organe de rail (30), et une paire de goupilles de verrouillage (104, 106), chaque goupille de verrouillage (104, 106) pouvant être insérée à travers l'un des trous de goupille (47, 49) jusque dans des trous de goupille (68, 70) dans une plaque supérieure courbe (54) de l'organe de coulisseau (32) de manière à s'engager avec l'organe de coulisseau (32) et limiter ainsi le mouvement de l'organe de coulisseau (32) par rapport à l'organe de rail (30).

6. Ensemble de support de barre de traction selon les revendications 1 à 4, **caractérisé par** une paire de trous de goupille (47, 49) formée dans l'organe de rail (30), une paire de butées (108, 110) et une paire de boulons (112, 114), chaque boulon (112, 114) pouvant être inséré à travers l'un des trous de goupille (47, 49), à travers l'organe de coulisseau (32) et à travers l'une des butées (108, 110), les butées (108, 110) s'engageant et empêchant le mouvement de l'organe de support de barre de traction (34) par rapport à l'organe de rail (30).

7. Ensemble de support de barre de traction selon les revendications 1 à 6, **caractérisé en ce que** l'organe de rail (30) comprend une plaque avant (46) et une plaque arrière (40), une plaque inférieure avant (48) faisant saillie vers l'arrière depuis un bord inférieur de la plaque avant (46) et une plaque inférieure arrière (50) faisant saillie vers l'avant depuis un bord inférieur de la plaque arrière (40).

8. Ensemble de support de barre de traction selon la revendication 7, **caractérisé en ce que** la plaque arrière (40), la plaque avant (46), la plaque inférieure avant (48), et la plaque inférieure arrière (50) sont courbes, avec un centre de courbure centré au niveau d'un point de pivotement de la barre de traction (22).

9. Ensemble de support de barre de traction selon les revendications 7 ou 8, **caractérisé en ce qu'**une fente courbe tournée vers l'avant (84) est formée dans la plaque arrière (40) ; un support de ressort est monté dans la fente ; une paire de ressorts est attachée à des côtés opposés du support de ressort ; et l'organe de coulisseau comporte une paire de languettes, chaque languette étant apte à s'engager avec l'un correspondant des ressorts, lesdits ressorts étant sollicités de manière à pousser l'organe de coulisseau dans une position centrale par rapport à l'organe de rail.

10. Ensemble de support de barre de traction selon les revendications 1 à 9, **caractérisé en ce qu'**une paire de plaques d'extrémité (31, 33) est fixée à des extrémités opposées de l'organe de coulisseau (32) de manière à confiner l'organe de support de barre de traction (34) à une partie intérieure de l'organe de coulisseau (32).

11. Ensemble de support de barre de traction selon la revendication 10, **caractérisé par** une paire de plages en caoutchouc (35, 37) chaque plage en caoutchouc (35, 37) étant montée sur l'une correspondante des plaques d'extrémité (31, 33), les plages en caoutchouc (35, 37) absorbant les impacts de l'organe de support de barre de traction (34).
